# EUROPÄISCHE PATENTSCHRIFT

(11) **EP 2 455 621 B1**
(45) Veröffentlichungstag und Bekanntmachung des Hinweises auf die Patenterteilung: **21.05.2014**
(21) Anmeldenummer: 12001043.4
(22) Anmeldetag: 22.01.2010
(51) Int. Cl.: F15B 21/04

(54) **Vorrichtung zur Reduzierung von Druckpulsationen**
Device for reducing pressure pulses
Dispositif de réduction des pulsations de pression

(30) Priorität: 22.01.2009 DE 102009005830
(43) Veröffentlichungstag der Anmeldung: 23.05.2012
(62) Teilanmeldung aus: 10701471.4
(73) Patentinhaber: FTE automotive GmbH, 96106 Ebern (DE)
(72) Erfinder: Gebert, Stefan, 96242 Sonnefeld (DE); Macht, Egid, 81247 München (DE); Marks, Paul, 96106 Ebern (DE); Müller, Robert, 96126 Maroldsweisach (DE); Ryba, Jürgen, 96182 Reckendorf (DE); Schneier, Jochen, 96199 Zapfendorf (DE); Weibelzahl, Wilfried, 96271 Grub (DE)
(74) Vertreter: Oppermann, Mark

(56) Entgegenhaltungen:
- DE-A1- 3 631 507
- DE-A1- 4 003 521
- DE-A1- 10 006 542
- DE-A1- 10 015 051
- DE-A1- 10 351 907
- DE-C1- 10 112 674
- DE-C1- 19 540 753

## Beschreibung

### TECHNISCHES GEBIET

Die vorliegende Erfindung bezieht sich auf eine zwischen einen Druckraum eines Nehmerzylinders und einen Druckraum eines Geberzylinders eines hydraulischen Kraftübertragungssystems schaltbare, für das Druckmittel stets offene Vorrichtung zur Reduzierung von Druckpulsationen, gemäß dem Oberbegriff des Patentanspruchs 1. Insbesondere bezieht sich die Erfindung auf solche Vorrichtungen zur Reduzierung von Druckpulsationen, wie sie massenweise in hydraulischen Kupplungsbetätigungen für Kraftfahrzeuge zum Einsatz kommen.

### STAND DER TECHNIK

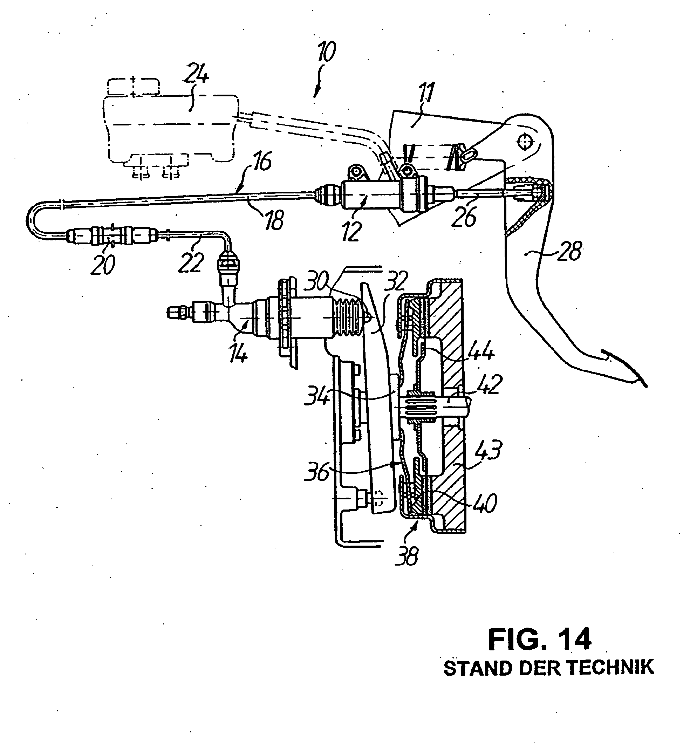

Die Fig. 14 zeigt eine herkömmliche hydraulische Kupplungsbetätigung 10 für Kraftfahrzeuge in einer vereinfachten Darstellung. Die hydraulische Kupplungsbetätigung 10 weist einen an einem Pedalbock 11 des Kraftfahrzeugs montierten Geberzylinder 12 und einen getriebenah im Kraftfahrzeug befestigten Nehmerzylinder 14 auf, die über eine Hydraulikleitung 16 hydraulisch miteinander verbunden sind, welche hier ausgehend vom Geberzylinder 12 aus einem ersten Rohrabschnitt 18, einem Schlauchabschnitt 20 und einem zweiten Rohrabschnitt 22 besteht. Der nicht dargestellte Kolben des hydraulisch an einen Ausgleichsbehälter 24 angeschlossenen Geberzylinders 12 ist über eine Kolbenstange 26 mit einem Kupplungspedal 28 wirkverbunden, so dass der Geberzylinder 12 durch Niedertreten des Kupplungspedals 28 betätigt werden kann, was eine Verschiebung des Kolbens im Geberzylinder 12 bewirkt. Hierbei wird in Richtung des Nehmerzylinders 14 eine Flüssigkeitssäule durch die Hydraulikleitung 16 hindurchgeschoben, die den Nehmerzylinder 14 hydraulisch beaufschlagt.

Der Nehmerzylinder 14, genauer dessen hier nicht gezeigter Kolben steht vermittels einer Kolbenstange 30 über einen Ausrückhebel 32 und ein Ausrücklager 34 mit einem Ausrückmechanismus 36 einer Reibungskupplung 38 in Wirkverbindung. Wird der Nehmerzylinder 14 zum Ausrücken der Reibungskupplung 38 hydraulisch beaufschlagt, so wird vermittels des Ausrückmechanismus 36 eine Kupplungsdruckplatte 40 von einer auf einer Getriebewelle 42 sitzenden, mit einer von der Kurbelwelle des Verbrennungsmotors (nicht dargestellt) getragenen Schwungscheibe 43 zusammenwirkenden Kupplungsmitnehmerscheibe 44 der Reibungskupplung 38 getrennt, und somit auch der Verbrennungsmotor vom Getriebe (ebenfalls nicht näher gezeigt) des Kraftfahrzeugs.

Wird das Kupplungspedal 28 entlastet, um die Reibungskupplung 38 wieder einzurücken, wird der Nehmerzylinder 14, genauer dessen Kolben infolge u.a. der Federkräfte der Reibungskupplung 38 wieder in seine Grund- bzw. Ausgangsstellung zurückgebracht, wobei die oben erwähnte Flüssigkeitssäule durch die Hydraulikleitung 16 hindurch wieder zurück in Richtung des Geberzylinders 12 geschoben wird.

Bei einer solchen hydraulischen Kupplungsbetätigung 10 - die als quasi-stationäres hydraulisches Kraftübertragungssystem zu betrachten ist, bei dem keine kontinuierliche Strömung der Hydraulikflüssigkeit vorliegt - werden Schwingungen vom Verbrennungsmotor, insbesondere dessen Kurbelwelle über die Bauteile der Reibungskupplung 38, das Ausrücklager 34, den Ausrückhebel 32 und den Nehmerzylinder 14 in die sich in der Hydraulikleitung 16 befindende Flüssigkeitssäule zwischen Nehmerzylinder 14 und Geberzylinder 12 übertragen, in der sie sich als Druckpulsationen fortpflanzen. Es wurde bereits als nachteilig empfunden, dass diese Druckpulsationen vom Fahrer am Kupplungspedal 28 als Vibrationen insbesondere dann zu spüren sind, wenn der Fuß auf dem Kupplungspedal 28 in typisch städtischer Fahrweise abgestützt wird - sogenanntes "Anlegekribbeln" - oder das durchgetretene Kupplungspedal 28 z.B. während eines Stopps vor einer Ampel gehalten wird.

So fehlt es denn im Stand der Technik nicht an Vorschlägen, wie dieser Problematik zu begegnen ist: siehe z.B. die den Oberbegriff des Patentanspruchs 1 bildende Druckschrift DE 36 31 507 C2 "Quadratwendel" oder die Druckschriften DE 40 03 521 C2 "Doppelleitung mit unterschiedlich langen Leitungszweigen", DE 195 40 753 C1 "Zusatzschwinger", DE 101 12 674 C1 "Membrandämpferdose" und DE 103 51 907 A1 "Dämpfungsvorrichtung mit Labyrinthkörper". Diesen Vorschlägen ist gemein, dass in die oder parallel zur Hydraulikleitung zwischen Geberzylinder und Nehmerzylinder eine separate, die Flüssigkeitssäule zwischen Geberzylinder und Nehmerzylinder nicht unterbrechende Baugruppe zur Schwingungsdämpfung eingesetzt bzw. angeordnet wird, welche die Druckpulsationen im Allgemeinen auch zufriedenstellend zu dämpfen vermag. Allerdings nehmen die vorbekannten Lösungen z.T. relativ viel Bauraum in Anspruch, der im Motorraum des Kraftfahrzeugs nicht immer in ausreichendem Maße zur Verfügung steht, und/oder bedingen einen verhältnismäßig komplexen und dementsprechend teuren Aufbau der Vorrichtung, wie er für die Massenfertigung unerwünscht ist.

Nicht näher betrachtet werden sollen in diesem Zusammenhang zwischen Geberzylinder und Nehmerzylinder geschaltete "doppeltwirkende" Ventilmechanismen (z.B. JP 59-89833 A, EP 1 719 921 A2), die bei jeder Verschiebung der Flüssigkeitssäule, d.h. sowohl bei einer Verschiebung in Richtung Nehmerzylinder als auch bei einer Verschiebung in Richtung Geberzylinder öffnen, und bei unbewegter Flüssigkeitssäule schließen, um den Geberzylinder vom Nehmerzylinder abzuschotten bzw. schwingungsmäßig zu entkoppeln, nachdem diese Ventilmechanismen (a) in der Regel noch ungleich aufwendiger ausgebildet sind als stets "druckmitteloffene" Dämpfungsvorrichtungen, die federvorgespannter Ventilkörper od.dgl. nicht bedürfen, (b) bestimmte Öffnungs- und Schließdrücke bedingen, welche in oft unerwünschter Weise die Rücklaufzeiten und die Systemhysterese erhöhen, und schließlich (c) mit Bypässen versehen anfälliger für Verschmutzungen und damit einhergehender Leistungseinbußen sind.

### AUFGABENSTELLUNG

Der Erfindung liegt die Aufgabe zugrunde, ausgehend vom eingangs geschilderten Stand der Technik eine zwischen einen Druckraum eines Nehmerzylinders und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung zur Reduzierung von Druckpulsationen bereitzustellen, die bei möglichst guten Schwingungsdämpfungseigenschaften verglichen zum Stand der Technik kompakter baut und einen kostengünstigen Aufbau besitzt.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 11.

Gemäß der Erfindung umfasst eine zwischen einen Druckraum eines Nehmerzylinders und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung zur Reduzierung von Druckpulsationen in Kombination eine Leitungszusatzstrecke in Form eines einen Wendelabschnitt aufweisenden Kanals, der eine nehmerzylinderseitige Öffnung, eine geberzylinderseitige Öffnung und eine Kanallänge aufweist, die ein Mehrfaches des direkten Abstands zwischen den beiden Öffnungen beträgt, und einen Volumenaufnehmer, der unter Druck elastisch verformbar ist, wobei der Kanal und der Volumenaufnehmer in einem Gehäuse zu einer Baugruppe zusammengefasst sind und der Wendelabschnitt schraubengewindeartig verläuft und eine Wendelumkehr aufweist, die den Wendelabschnitt in einen rechtsgewindeartig verlaufenden Unterabschnitt und einen linksgewindeartig verlaufenden Unterabschnitt unterteilt.

Untersuchungen der Anmelderin haben zunächst zu dem überraschenden Ergebnis geführt, dass die vorbeschriebenen zwei Maßnahmen zur Schwingungsdämpfung - nämlich Leitungszusatzstrecke in Form eines Kanals einerseits und Volumenaufnehmer andererseits - in Kombination Druckpulsationen in einem Maße zu verringern vermögen, das weit über den Schwingungsdämpfungseffekt der jeweiligen Einzelmaßnahme hinausgeht, so dass die Schwingungsdämpfungseigenschaften der erfindungsgemäßen Vorrichtung als sehr gut bezeichnet werden können. Da darüber hinaus der Kanal und der Volumenaufnehmer in ein und demselben Gehäuse zu einer Baugruppe zusammengefasst sind, wobei zudem die Kanallänge ein Mehrfaches des direkten Abstands zwischen den beiden Kanalöffnungen beträgt, baut die erfindungsgemäße Vorrichtung zum einen sehr kompakt, zum anderen können der Kanal und der Volumenaufnehmer mit sehr geringem Abdicht- und Verbindungsaufwand, also sehr kostengünstig fluidverbunden werden. Ein weiterer Vorteil der erfindungsgemäßen Vorrichtung besteht darin, dass beim Einsatz der Vorrichtung in einer - ansonsten herkömmlichen - hydraulischen Kupplungsbetätigung gemäß Fig. 14 der nehmerzylindernahe, zweite Rohrabschnitt der Hydraulikleitung, der in der Regel zur Schwingungsreduktion mit einem gegenüber dem ersten Rohrabschnitt verengten Querschnitt ausgeführt wurde, entfallen kann, d.h. der Schlauchabschnitt der Hydraulikleitung kann nunmehr unmittelbar an den Druckanschluss des Nehmerzylinders angeschlossen werden, wobei quasi der zweite Rohrabschnitt gemäß Fig. 14 auf einfache und sehr platzsparende Weise in der erfindungsgemäßen Vorrichtung integriert ist.

Dabei ist es insbesondere unter fertigungstechnischen Gesichtspunkten vorteilhaft, dass der Kanal einen schraubengewindeartig verlaufenden Wendelabschnitt hat. Da der Wendelabschnitt ferner eine Wendelumkehr aufweist, die den Wendelabschnitt in einen rechtsgewindeartig verlaufenden Unterabschnitt und einen linksgewindeartig verlaufenden Unterabschnitt unterteilt, wird insbesondere der axiale Bauraumbedarf für den Wendelabschnitt reduziert.

Als besonders schwingungsdämpfend bzw. -reduzierend wirksam hat es sich erwiesen, wenn der Volumenaufnehmer dem die Leitungszusatzstrecke bildenden Kanal in einer Richtung vom Nehmerzylinder aus zum Geberzylinder hin gesehen hydraulisch vorgeschaltet ist, so dass die sich vom Druckraum des Nehmerzylinders weiter fortpflanzende Druckpulsation nicht erst durch die Leitungszusatzstrecke hindurch laufen muss, um den Volumenaufnehmer zu erreichen.

In besonders kostengünstiger Ausgestaltung der erfindungsgemäßen Vorrichtung kann in das Gehäuse ein Einsatzteil eingesetzt sein, welches zumindest teilweise zusammen mit dem Gehäuse den Kanal begrenzt, was auch die Montage der Vorrichtung einfach gestaltet.

Des Weiteren kann der Wendelabschnitt des Kanals am Außenumfang des Einsatzteils als Nut ausgebildet sein, die nach radial außen von einer Innenumfangsfläche des Gehäuses abgedeckt ist, was zum einen besonders einfach und kostengünstig herstellbar ist - beispielsweise durch Spitzgießen des Einsatzteils, dessen nach radial außen offene Nut dann erst beim Fügen des Einsatzteils in das Gehäuse durch die dort ohnehin vorhandene Gehäusewandung auf denkbar einfache Weise zum Kanal "komplettiert" wird, und zwar ohne die Verwendung von Dichtelementen od.dgl. - und zum anderen eine Umlenkung der Flüssigkeitssäule bewirkt, die sich im Hinblick auf eine gute Schwingungsdämpfung bei möglichst geringem Durchflusswiderstand als vorteilhaft erwiesen hat.

Es ist weiterhin bevorzugt, wenn es sich bei dem Volumenaufnehmer um ein gummielastisches, spulenförmiges Element handelt, mit einer Durchgangsbohrung und einer außenumfangsseitigen Ringaussparung, die zusammen mit einer Innenumfangsfläche des Gehäuses eine ringförmige Luftkammer begrenzt. Bei einer solchen Ausgestaltung des Volumenaufnehmers wird, wenn eine Druckamplitude in die Durchgangsbohrung hineinläuft, das spulenförmige Element gegen die Federwirkung des gummielastischen Materials verformt, wobei das Luftvolumen in der ringförmigen Luftkammer komprimiert wird, so dass das spulenförmige Element - wie der Begriff "Volumenaufnehmer" schon impliziert - im Bereich der Durchgangsbohrung eine definierte Aufweitung erfährt, die zu einer gewissen "Entlastung" der Druckamplitude führt. Hierbei sorgt die Federwirkung des gummielastischen Materials und des komprimierten Luftvolumens für eine automatische Rückstellung des spulenförmigen Elements in seine Ausgangsform, wenn der im Bereich der Durchgangsbohrung des spulenförmigen Elements vorliegende Druck des Druckmittels einen vorbestimmten Wert unterschreitet.

Bei einer Variante der Vorrichtung handelt es sich bei dem Gehäuse um ein Zylindergehäuse des Nehmerzylinders (mehr bevorzugt) oder des Geberzylinders (weniger bevorzugt), welches einen Druckanschluss aufweist. Durch Anordnung der Vorrichtung im Zylindergehäuse, insbesondere im Druckraum des Nehmerzylinders - wo für diesen Zweck kein zusätzlicher Bauraum vorgesehen werden muss, da der hier ohnehin vorhandene Zylindertotraum genutzt werden kann, so dass sich die axiale Baulänge des Nehmerzylinders verglichen mit herkömmlichen Konstruktionen nicht ändert - erfolgt die Integration der schwingungsdämpfenden Maßnahmen im hydraulischen Kraftübertragungssystem auf sehr platzsparende Weise, wobei ggf. sogar ein vorhandener Nehmerzylinder, wie er etwa aus der EP 1 666 752 A2 der Anmelderin bekannt ist, unverändert hergenommen werden kann, um die erfindungsgemäße Vorrichtung zu integrieren. Durch die Anordnung der erfindungsgemäßen Vorrichtung im Druckraum des Nehmerzylinders, d.h. in unmittelbarer Nähe zum Ort der Einleitung der Schwingungen in die Flüssigkeitssäule wird ferner in vorteilhafter Weise dafür gesorgt, dass sich die Druckpulsationen nicht mit maximaler Amplitude in/durch die Hydraulikleitung zwischen Nehmerzylinder und Geberzylinder fortpflanzen können, so dass auch die Gefahr minimiert wird, dass sich die Hydraulikleitung schwingungsbedingt von ihren Befestigungsstellen z.B. an der Karosserie des Kraftfahrzeugs löst bzw. sich an diesen losrüttelt.

In einer insbesondere wartungsgünstigen Alternative zu der Anordnung der Vorrichtung im Druckraum des Zylindergehäuses können Kanal und Volumenaufnehmer der Vorrichtung in einem Druckanschlussabschnitt des Zylindergehäuses enthalten sein. In zweckmäßiger Ausgestaltung ist dann das Einsatzteil in den Druckanschlussabschnitt eingesetzt und dort mittels eines Anschlussteils gehalten. Hinsichtlich insbesondere einer einfachen Montage und Austauschbarkeit ist es hierbei vorteilhaft, wenn das Einsatzteil und das Anschlussteil einstückig ausgebildet sind.

Im Hinblick auf eine möglichst gute Dämpfungswirkung hat es sich weiterhin als vorteilhaft erwiesen, wenn der Wendelabschnitt des Kanals einen Querschnitt aufweist, der kleiner oder gleich dem minimalen Querschnitt des Druckanschlusses des Zylindergehäuses ist, wodurch auch eine gewisse Drosselwirkung gegeben ist.

Grundsätzlich kann das Einsatzteil und/oder das Gehäuse der Vorrichtung aus einem metallischen Werkstoff, beispielsweise einer Aluminiumlegierung, etwa durch spanende Bearbeitung hergestellt werden. Insbesondere dem Erhalt einer kostengünstigen Vorrichtung förderlich ist es aber, wenn das Einsatzteil und vorzugsweise auch das Gehäuse aus einem Kunststoff spritzgegossen sind, wie schon erwähnt.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen und elastomere Teile zur Vereinfachung der Darstellung zumeist im unverformten Zustand gezeigt sind. In den Zeichnungen zeigen:
- Fig. 1: eine Längsschnittansicht eines Nehmerzylinders für eine hydraulische Kupplungsbetätigung für Kraftfahrzeuge, in dessen Druckraum ein Einsatzteil eingesetzt ist, das mit einer für das Druckmittel stets offenen Vorrichtung zur Reduzierung von Druckpulsationen ausgerüstet ist, welche in Kombination eine Leitungszusatzstrecke in Form eines Kanals und einen Volumenaufnehmer aufweist, nicht gemäß der Erfindung,
- Fig. 2: eine perspektivische Einzeldarstellung des bei dem Nehmerzylinder gemäß Fig. 1 im Druckanschluss befestigten topfförmigen Einsatzteils von schräg vorne,
- Fig. 3: eine Seitenansicht des Einsatzteils gemäß Fig. 2,
- Fig. 4: eine Vorderansicht des Einsatzteils gemäß Fig. 2 von links in Fig. 3,
- Fig. 5: eine Rückansicht des Einsatzteils gemäß Fig. 2 von rechts in Fig. 3,
- Fig. 6: eine Schnittansicht des Einsatzteils gemäß Fig. 2 entsprechend der Schnittverlaufslinie VI-VI in Fig. 5,
- Fig. 7: eine vergrößerte Darstellung des Details VII in Fig. 6,
- Fig. 8: eine perspektivische Einzeldarstellung des bei dem Nehmerzylinder gemäß Fig. 1 am Einsatzteil montierten elastomeren Volumenaufnehmers von schräg vorne,
- Fig. 9: eine Längsschnittansicht des Volumenaufnehmers gemäß Fig. 8,

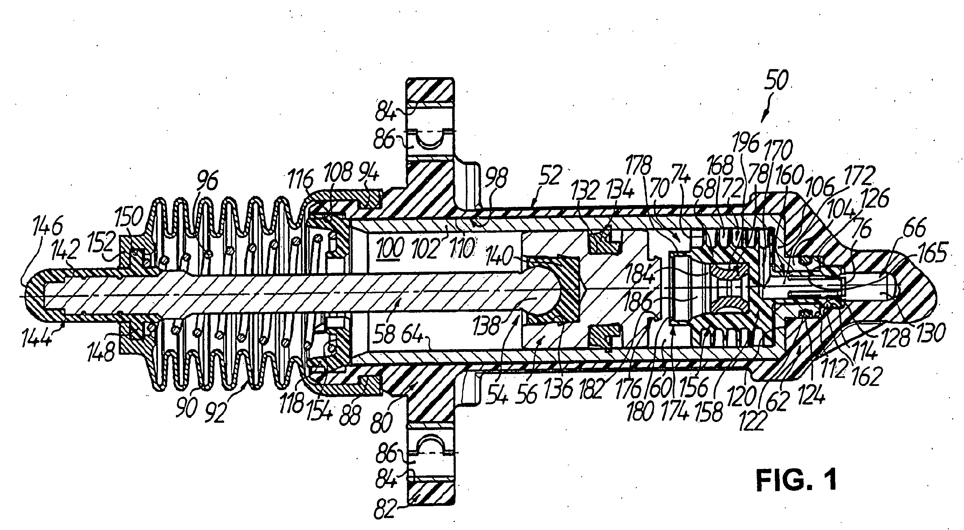

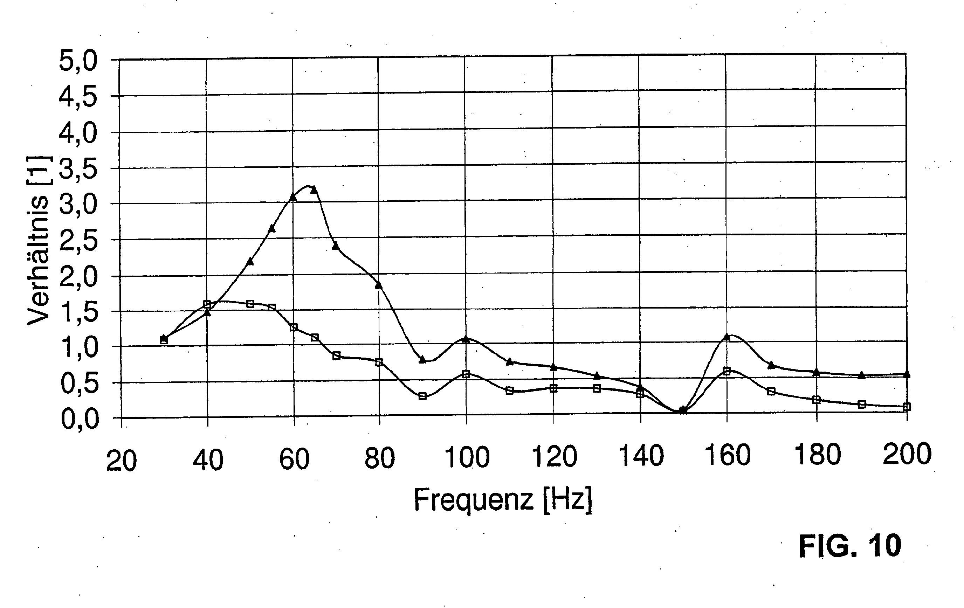

- Fig. 10: ein Diagramm, in dem für (1.) eine hydraulische Kupplungsbetätigung ohne Vorrichtung zur Reduzierung von Druckpulsationen (Markierung mit Dreiecken) und (2.) eine hydraulische Kupplungsbetätigung mit einem entsprechend Fig. 1 ausgerüsteten Nehmerzylinder (Markierung mit nicht ausgefüllten Quadraten) das Verhältnis der an einer Kolbenstange des Geberzylinders gemessenen Beschleunigung zu der an einer Kolbenstange des Nehmerzylinders gemessenen Beschleunigung über der Frequenz aufgetragen ist, als Ergebnis eines Versuchs, bei dem eine Sinusschwingung mit variabler Frequenz und einer Amplitude von 1 g (9,81 m/s²) an die Kolbenstange des Nehmerzylinder angelegt wurde,
- Fig. 11: eine abgebrochene Längsschnittansicht eines Nehmerzylinders für eine hydraulische Kupplungsbetätigung für Kraftfahrzeuge, in dessen Druckanschlussabschnitt ein Volumenaufnehmer und ein Einsatzteil mit einer Leitungszusatzstrecke in Form eines Kanals eingesetzt sind, welche in Kombination eine für das Druckmittel stets offene Vorrichtung zur Reduzierung von Druckpulsationen bilden und die im Druckanschlussabschnitt mittels eines Anschlussteils gehalten sind, als ein erstes Ausführungsbeispiel der erfindungsgemäßen Vorrichtung,
- Fig. 12: eine perspektivische Einzeldarstellung des bei dem Nehmerzylinder gemäß Fig. 11 im Druckanschlussabschnitt eingesetzten Einsatzteils von schräg vorne,
- Fig. 13: eine abgebrochene Längsschnittansicht eines Nehmerzylinders für eine hydraulische Kupplungsbetätigung für Kraftfahrzeuge, bei dem - ähnlich der Fig. 11 - die aus Volumenaufnehmer und Leitungszusatzstrecke in Form eines Kanals bestehende Vorrichtung zur Reduzierung von Druckpulsationen im Druckanschlussabschnitt aufgenommen ist, wobei im Gegensatz zur Fig. 11 Einsatzteil und Anschlussteil einstückig ausgebildet sind, als ein zweites Ausführungsbeispiel der erfindungsgemäßen Vorrichtung, und
- Fig. 14: eine prinzipielle Darstellung einer hydraulischen Kupplungsbetätigung nach dem Stand der Technik.

### DETAILLIERTE BESCHREIBUNG DER AUSFÜHRUNGSBEISPIELE

Die Fig. 1 zeigt einen Nehmerzylinder 50 für ein schwingungsgedämpftes hydraulisches Kraftübertragungssystem, namentlich eine schwingungsgedämpfte hydraulische Kupplungsbetätigung für Kraftfahrzeuge. Der Nehmerzylinder 50 hat ein allgemein mit 52 beziffertes Zylindergehäuse, in dem eine Kolbenbaugruppe 54 längsverschieblich aufgenommen ist, die einen Kolben 56 und eine zumindest zug- und druckfest, also betätigungswirksam mit dem Kolben 56 verbundene Kolbenstange 58 umfasst. Im Zylindergehäuse 52 befindet sich ein Druckraum 60, der auf der in Fig. 1 linken Seite variabel von dem Kolben 56, auf der in Fig. 1 rechten Seite fest von einem Gehäuseboden 62 des Zylindergehäuses 52 und nach radial außen fest von einer Umfangswand 64 des Zylindergehäuses 52 begrenzt ist. Der Druckraum 60 ist wahlweise über einen am Gehäuseboden 62 vorgesehenen Druckanschluss 66, der im montierten Zustand des Nehmerzylinders 50 in an sich bekannter Weise (vgl. Fig. 14) über eine Druckleitung (die verglichen mit Fig. 14 ggf. auch anders ausgebildet sein kann) an einen Kupplungsgeberzylinder angeschlossen ist, mit einem Druckmittel, etwa Bremsflüssigkeit beaufschlagbar, um den Kolben 56 im Zylindergehäuse 52 zu verschieben. Wie nachfolgend noch näher beschrieben werden wird, ist in dem Druckraum 60 angrenzend an den Gehäuseboden 62 ein Einsatzteil 68 eingesetzt, welches im Druckanschluss 66 befestigt ist und im hier dargestellten Fall vorteilhaft mehrere Funktionen erfüllt. Hierbei dient das Einsatzteil 68 insbesondere als Träger für eine für das Druckmittel stets offenen Vorrichtung 70 zur Reduzierung von Druckpulsationen bzw. ist mit dieser ausgerüstet.

Wie weiter unten ebenfalls noch im Detail erläutert werden wird, umfasst die im montierten Zustand des Nehmerzylinders 50 mithin zwischen den Druckraum 60 des Nehmerzylinders 50 und einen Druckraum des Geberzylinders (vgl. wiederum Fig. 14) geschaltete Vorrichtung 70 zur Reduzierung von Druckpulsationen zum einen eine Leitungszusatzstrecke in Form eines Kanals 72, der eine druckraum- bzw. nehmerzylinderseitige Öffnung 74, eine druckanschluss- bzw. geberzylinderseitige Öffnung 76 und dazwischen eine Kanallänge aufweist, die ein Mehrfaches des direkten Abstands, d.h. des "Luftlinienabstands" zwischen den beiden Öffnungen 74, 76 beträgt, und zum anderen einen am Einsatzteil 68 montierten Volumenaufnehmer 78, der unter Druck elastisch verformbar ist. Im Ergebnis sind der Kanal 72 und der Volumenaufnehmer 78 der Vorrichtung 70 zur Reduzierung von Druckpulsationen im Zylindergehäuse 52 höchst kompakt zu einer Baugruppe zusammengefasst, wobei das Einsatzteil 68 zumindest teilweise zusammen mit dem Zylindergehäuse 52 den Kanal 72 begrenzt.

Gemäß Fig. 1 weist das Zylindergehäuse 52 einen vorzugsweise aus Kunststoff spritzgegossenen Grundkörper 80 auf, der außenumfangsseitig mit einem Befestigungsflansch 82 für die Montage des Nehmerzylinders 50 im Kraftfahrzeug versehen ist. Der Befestigungsflansch 82 weist zwei Befestigungsbohrungen 84 auf, die mittels geschlitzter Stahlbuchsen 86 verstärkt sind. Durch die mit den Stahlbuchsen 86 ausgekleideten Befestigungsbohrungen 84 erstrecken sich im montierten Zustand des Nehmerzylinders 50 z.B. Schrauben (nicht gezeigt) hindurch, die der Befestigung des Nehmerzylinders 50 an etwa einer Getriebewand (nicht dargestellt) im Kraftfahrzeug dienen. In Fig. 1 links von dem Befestigungsflansch 82 hat der Grundkörper 80 des Zylindergehäuses 52 des Weiteren außenumfangsseitig eine Radialnut 88, in die eine einen die Kolbenstange 58 umgebenden Faltenbalgabschnitt 90 aufweisende elastomere Schutzkappe 92 mit einem innenumfangsseitigen Ringbund 94 eingeknüpft ist. Der Faltenbalgabschnitt 90 der Schutzkappe 92 umschließt außerdem ein auf der vom Druckraum 60 abgewandten Seite des Kolbens 56 vorgesehenes Federelement in der Form einer Schraubendruckfeder 96, die an ihrem in Fig. 1 rechten Ende am Zylindergehäuse 52 abgestützt ist und mit ihrem in Fig. 1 linken Ende an der Kolbenstange 58 angreift, so dass die Schraubendruckfeder 96 die Kolbenbaugruppe 54 in einer vom Gehäuseboden 62 weggewandten Richtung vorspannt, um die Kolbenstange 58 im montierten Zustand des Nehmerzylinders 50 in Anlage an einem Kupplungshebel (nicht gezeigt) zu halten.

Innenumfangsseitig weist der Grundkörper 80 des Zylindergehäuses 52 eine in Fig. 1 nach links offene Stufenbohrung 98 auf, in die eine vorzugsweise metallische Laufhülse 100 als weiterer Bestandteil des Zylindergehäuses 52 eingesetzt ist. Die Laufhülse 100 hat zwei hohlzylindrische Hülsenabschnitte 102, 104 unterschiedlichen Durchmessers, die am Gehäuseboden 62 des Zylindergehäuses 52 über einen Ringabschnitt 106 miteinander verbunden sind. Ausgehend von der in Fig. 1 linken Seite weist die Stufenbohrung 98 des Grundkörpers 80 nun vier Bohrungsabschnitte 108, 110, 112 und 114 verschiedenen Durchmessers auf, der sich in Fig. 1 von links nach rechts verkleinert.

Der erste Bohrungsabschnitt 108 der Stufenbohrung 98 im Grundkörper 80 hat an seinem offenen Ende einen Hinterschnitt 116, der der Festlegung eines ringförmigen, für die Montage geschlitzten Sicherungselements 118 aus vorzugsweise Kunststoff am Zylindergehäuse 52 dient, welches an der in Fig. 1 linken Stirnfläche der Laufhülse 100 anliegt und somit die Laufhülse 100 im Grundkörper 80 des Zylindergehäuses 52 sichert. Im zweiten Bohrungsabschnitt 110 der Stufenbohrung 98 des Grundkörpers 80 ist der durchmessergrößere Hülsenabschnitt 102 der Laufhülse 100 eng aufgenommen, der mit seiner Innenumfangsfläche die den Druckraum 60 begrenzende Umfangswand 64 ausbildet. An den zweiten Bohrungsabschnitt 110 schließt sich der dritte Bohrungsabschnitt 112 der Stufenbohrung 98 über eine Ringschulter 120 an, an welcher der Ringabschnitt 106 der Laufhülse 100 anliegt. Im dritten Bohrungsabschnitt 112 der Stufenbohrung 98 im Grundkörper 80 ist der durchmesserkleinere Hülsenabschnitt 104 der Laufhülse 100 eng aufgenommen. Dabei ist der Hülsenabschnitt 104 außenumfangsseitig mit einer Radialnut 122 zur Aufnahme eines O-Rings 124 versehen, welcher für eine statische Abdichtung zwischen dem dritten Bohrungsabschnitt 112 des Grundkörpers 80 und dem Hülsenabschnitt 104 der Laufhülse 100 sorgt. An den dritten Bohrungsabschnitt 112 schließt sich über eine weitere Ringschulter 126 der vierte Bohrungsabschnitt 114 des Grundkörpers 80 an, wobei die Abmessungen des durchmesserkleineren Hülsenabschnitts 104 der Laufhülse 100 einerseits und der dritten und vierten Bohrungsabschnitte 112, 114 der Stufenbohrung 98 andererseits so aufeinander abgestimmt sind, dass eine ringförmige Stirnfläche 128 des Hülsenabschnitts 104 der Laufhülse 100 einen geringen axialen Abstand zur Ringschulter 126 des Grundkörpers 80 aufweist und über diese zur nachfolgend noch näher beschriebenen Befestigung des Einsatzteils 68 im Druckanschluss 66 nach radial innen vorsteht. Der vierte Bohrungsabschnitt 114 der Stufenbohrung 98 im Grundkörper 80 ist ferner innenumfangsseitig mit einer Mehrzahl von, hier z.B. vier sich in axialer Richtung des Zylindergehäuses 52 erstreckenden Längsrippen (in Fig. 1 nicht zu erkennen) versehen, die nach radial innen vorstehen, ungleichmäßig bzw. asymmetrisch über dem Umfang des vierten Bohrungsabschnitts 114 verteilt sind und einer Drehwinkelorientierung des Einsatzteils 68 im Druckanschluss 66 dienen, wie nachfolgend ebenfalls noch näher erläutert werden wird. An dem in Fig. 1 rechten Ende des vierten Bohrungsabschnitts 114 der Stufenbohrung 98 mündet schließlich eine im Grundkörper 80 ausgebildete, durchmesserkleinere Druckanschlussbohrung 130 im vierten Bohrungsabschnitt 114.

Aus der obigen Beschreibung ist ersichtlich, dass die Druckanschlussbohrung 130, der vierte Bohrungsabschnitt 114 der Stufenbohrung 98 sowie der in deren drittem Bohrungsabschnitt 112 aufgenommene Hülsenabschnitt 104 der Laufhülse 100 Bestandteil des Druckanschlusses 66 sind, über den der Druckraum 60 des Nehmerzylinders 50 mit dem Druckmittel beaufschlagt werden kann. Infolge der durch den O-Ring 124 bewirkten statischen Abdichtung am Außenumfang des durchmesserkleineren Hülsenabschnitts 104 der Laufhülse 100 erfährt diese bei einer Druckbeaufschlagung des Druckraums 60 über den Druckanschluss 66, bei welcher der hydraulische Druck zum einen auf die ringförmige Stirnfläche 128 des Hülsenabschnitts 104 und zum anderen auf die dieser gegenüber flächengrößeren, dem Druckraum 60 zugewandten Stirnfläche des Ringabschnitts 106 der Laufhülse 100 wirkt, eine resultierende Kraft nach rechts in Fig. 1, die bestrebt ist, die Laufhülse 100 in der Stufenbohrung 98 des Grundkörpers 80 zu halten, die Befestigung der Laufhülse 100 im Grundkörper 80 mittels des Sicherungselements 118 also entlastet.

Wie der Fig. 1 des Weiteren zu entnehmen ist, weist der mit geringem Radialspiel im durchmessergrößeren Hülsenabschnitt 102 der Laufhülse 100 des Zylindergehäuses 52 geführte, im dargestellten Fall metallische Kolben 56 am Außenumfang eine Radialnut 132 zur Aufnahme eines Nutrings 134 auf. Der elastomere Nutring 134 liegt in an sich bekannter Weise mit seiner außenumfangsseitigen Dichtlippe unter einer gewissen Vorspannung an der Umfangswand 64 des Zylindergehäuses 52 an und sorgt somit für eine dynamische Abdichtung des Druckraums 60 nach links in Fig. 1.

Auf der in Fig. 1 linken Seite ist der Kolben 56 ferner mit einer mittigen Aussparung 136 versehen, in der ein am in Fig. 1 rechten Ende der Kolbenstange 58 ausgebildeter Kugelkopf 138 mittels eines Sicherungselements 140 gelenkig gehalten ist, so dass die Kolbenstange 58 bezüglich des Kolbens 56 eine gewisse Winkelbeweglichkeit hat. Anstelle der in Fig. 1 gezeigten Ausgestaltung der Kolbenbaugruppe 54 könnte diese auch einteilig ausgebildet sein, mit einer zur Kolbenstange hin konisch oder ballig abfallenden Kolbenaußenfläche zur Gewährleistung der Winkelbeweglichkeit, wie es prinzipiell aus der DE 43 22 969 A1 oder der DE 43 31 241 A1 bekannt ist.

Die im dargestellten Fall metallische Kolbenstange 58 hat auf der in Fig. 1 linken Seite ein profiliertes Ende 142, auf das ein Endstück 144 aus Kunststoff aufgespritzt ist, welches eine im Wesentlichen sphärische Endfläche 146 aufweist, über die die Kolbenstange 58 betätigungswirksam am Kupplungshebel (nicht gezeigt) angreift. Am in Fig. 1 rechten Ende des Endstücks 144 bildet dieses einen Ringbund 148 der Kolbenstange 58 aus, der zum einen der Anbindung der Schutzkappe 92 an der Kolbenstange 58 dient, wobei der Ringbund 148 formschlüssig in einer im Wesentlichen komplementär geformten Ringaussparung 150 in einem Befestigungsabschnitt 152 der Schutzkappe 92 eingreift, der sich auf der vom Druckraum 60 abgewandten Seite der Schutzkappe 92 an den Faltenbalgabschnitt 90 der Schutzkappe 92 anschließt. Zum anderen bildet der Ringbund 148 der Kolbenstange 58 mit seiner dem Druckraum 60 zugewandten Stirnseite ein Widerlager für die Schraubendruckfeder 96 aus, wobei von dem dem Ringbund 148 zugewandten Ende der vorgespannten Schraubendruckfeder 96 auch eine gewisse radiale Zentrierwirkung für die Kolbenstange 58 ausgeht, die bei der Montage des Nehmerzylinders 50 im Kraftfahrzeug von Vorteil ist.

Der Fig. 1 ist ferner zu entnehmen, dass das Sicherungselement 118 zum Halten der Laufhülse 100 im Zylindergehäuse 52 auf seiner vom Druckraum 60 abgewandten Seite mit einer Axialnut 154 versehen ist, die als weiteres Widerlager und zur Zentrierung des dem Druckraum 60 zugewandten, in Fig. 1 rechten Endes der Schraubendruckfeder 96 dient, welche sich im Durchmesser ausgehend vom Ringbund 148 der Kolbenstange 58 zur Axialnut 154 hin im Wesentlichen konisch erweitert, also kegelstumpfförmig ausgebildet ist. Durch diese "Herausverlagerung" der Schraubendruckfeder 96 aus dem Druckraum 60 und der Laufhülse 100 hin zu der gezeigten Stellung zwischen Sicherungselement 118 und Ringbund 148 an der Kolbenstange 58 kann gegenüber vorbekannten Konstruktionen vorteilhaft das Verhältnis von Hub- zu Totraumvolumen - oder Istvolumen in der dargestellten (Einbau)Grundstellung des Kolbens 56 - des Druckraums 60 verringert werden, was letztendlich eine sehr kurze axiale Baulänge des eigentlichen Zylindergehäuses 52 bedingt. Darüber hinaus wird, da der Druckraum 60 keine Kolbenrückstellfeder aufzunehmen hat, an der sich Luftblasen "festsetzen" könnten, der Druckraum 60 bei einem Rücklauf des Kolbens 56 aus einer Betätigungsstellung in seine Grundstellung vom Druckmittel gut durchspült bzw. entleert, was zu einer sehr guten Entlüftung des Nehmerzylinders 50 beiträgt.

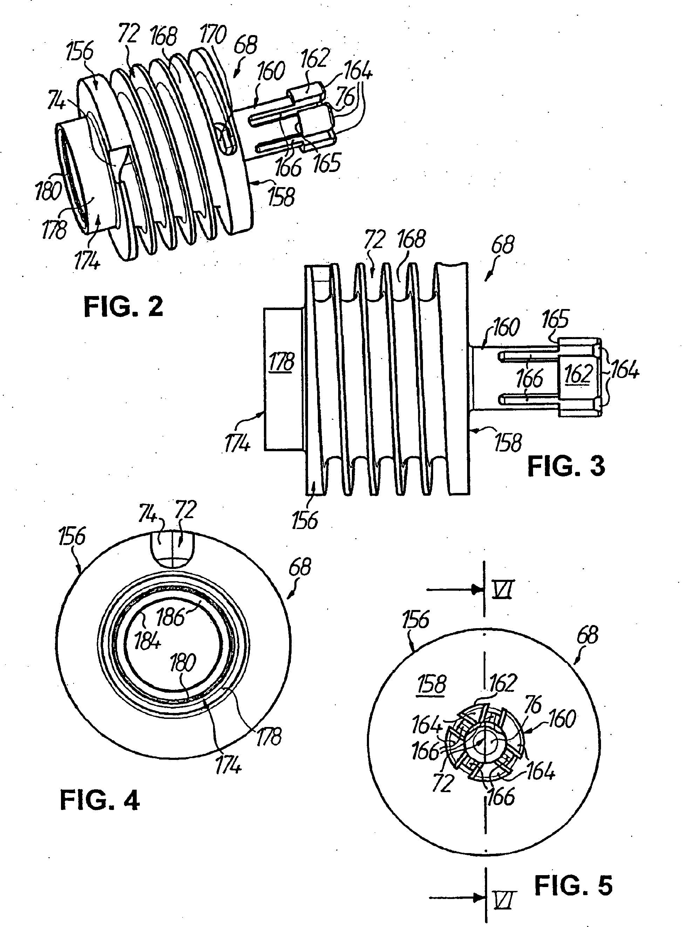

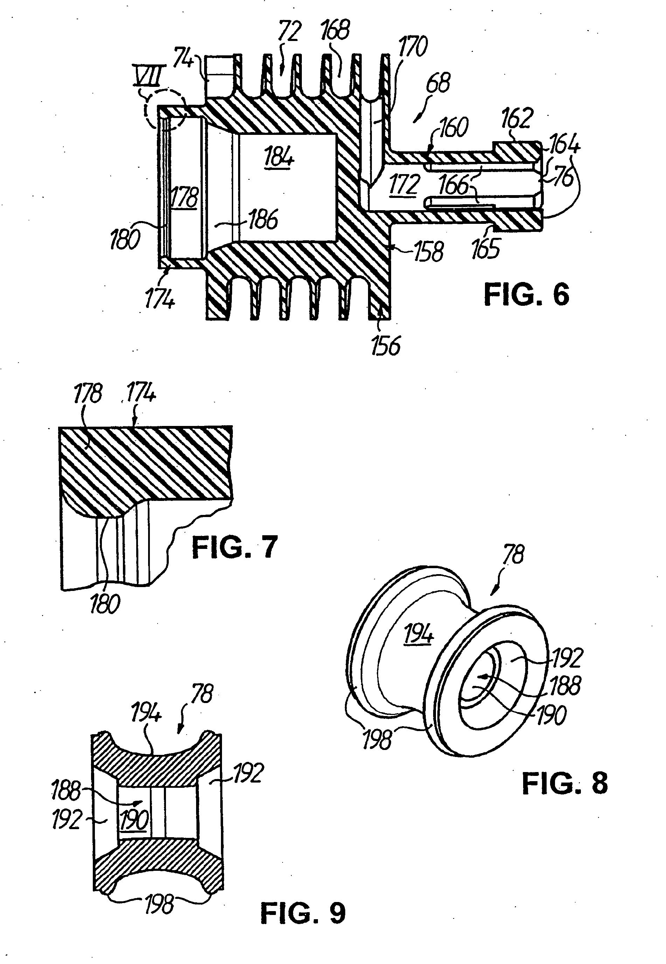

Den Fig. 2 bis 9 sind weitere Details der Vorrichtung 70 zur Reduzierung von Druckpulsationen, namentlich zu dem aus einem geeigneten Kunststoff, etwa aus einem glasfaserverstärkten Polyamid 66 spritzgegossenen Einsatzteil 68 (Fig. 2 bis 7) und dem darin gehaltenen, elastomeren Volumenaufnehmer 78 (Fig. 8 und 9) zu entnehmen.

Gemäß insbesondere den Fig. 1 und 6 ist das Einsatzteil 68 im Wesentlichen topfförmig ausgebildet, mit einem Mantelabschnitt 156, dessen Außendurchmesser im Wesentlichen dem Innendurchmesser der Umfangswand 64 des Zylindergehäuses 52 entspricht, und einem Boden 158, an dem sich ein im Wesentlichen hohlzylindrischer Fortsatz 160 anschließt, der in dem Druckanschluss 66 des Zylindergehäuses 52 eingesteckt ist.

Genauer gesagt ist das Einsatzteil 68 axial formschlüssig im Druckanschluss 66 des Zylindergehäuses 52 befestigt, nämlich mittels einer Schnappverbindung. Hierfür ist der Fortsatz 160 des Einsatzteils 68 ausgehend von seinem freien Ende am Außenumfang mit einem segmentierten Ringbund 162 versehen und zur Bildung einer Mehrzahl von Federarmen 164 (siehe insbesondere die Fig. 2, 3, 5 und 6) mehrfach längsgeschlitzt, wobei eine durch den Ringbund 162 des Fortsatzes 160 gebildete, zum Druckraum 60 hingewandte Widerlagerfläche 165 gemäß Fig. 1 die über den vierten Bohrungsabschnitt 114 der Stufenbohrung 98 im Grundkörper 80 nach radial innen überstehende, ringförmige Stirnfläche 128, welche vom durchmesserkleineren Hülsenabschnitt 104 der Laufhülse 100 gebildet ist, im Druckanschluss 66 des Zylindergehäuses 52 schnapphakenartig hintergreift. Gemäß insbesondere Fig. 5 sind es vier sich in Längsrichtung des Fortsatzes 160 erstreckende Schlitze 166, die im dargestellten Fall den Fortsatz 160 des Einsatzteils 68 unterbrechen und deren asymmetrische Verteilung über dem Umfang des Fortsatzes 160 der Verteilung der oben erwähnten Längsrippen (nicht gezeigt) im vierten Bohrungsabschnitt 114 der Stufenbohrung 98 im Grundkörper 80 des Zylindergehäuses 52 entspricht. Hierbei sind die Schlitze 166 im Fortsatz 160 des Einsatzteils 68 einerseits und die Längsrippen im Grundkörper 80 des Zylindergehäuses 52 andererseits maßlich derart aufeinander abgestimmt, dass im montierten Zustand des Einsatzteils 68 die gehäuseseitigen Längsrippen mit geringem Umfangsspiel in die Schlitze 166 eingreifen, dabei aber nicht nach radial innen über die Federarme 164 vorstehen. Die asymmetrische, aufeinander abgestimmte Umfangsverteilung der Längsrippen / Schlitze 166 sorgt auf einfache Weise für eine eindeutige Drehwinkelorientierung des montierten Einsatzteils 68 im Nehmerzylinder 50, nämlich derart, dass sich die druckraumseitige Öffnung 74 des Kanals 72 der Vorrichtung 70 zur Reduzierung von Druckpulsationen in der Einbaulage des Nehmerzylinders 50 oben nahe der durch die Umfangswand 64 gebildeten Innenumfangsfläche des Zylindergehäuses 52 befindet, wie in Fig. 1 gezeigt.

Zur vorzugsweise automatisierten Herstellung der vorbeschriebenen Schnappverbindung zwischen dem Zylindergehäuse 52 und dem bezüglich des Zylindergehäuses 52 winkelorientierten Einsatzteil 68 wird Letzteres ausgehend vom offenen Ende des mit der Laufhülse 100 ausgekleideten Zylindergehäuses 52 in die Laufhülse 100 eingeschoben bis die Federarme 164 des Fortsatzes 160 an einer kleinen Schräge zwischen dem Ringabschnitt 106 und dem Innenumfang des durchmesserkleineren Hülsenabschnitts 104 der Laufhülse 100 zur Anlage gelangen. Bei der weiteren axialen Relativverschiebung des Einsatzteils 68 bezüglich des Zylindergehäuses 52 federn die Federarme 164 nach radial innen. In der Folge fädeln sich die Längsrippen (nicht gezeigt) im vierten Bohrungsabschnitt 114 des Grundkörpers 80 des Zylindergehäuses 52 in den Schlitzen 166 des Fortsatzes 160 des Einsatzteils 68 ein, bevor die Federarme 164 wieder nach radial außen auffedern und mit ihrer segmentierten Widerlagerfläche 165 hinter der ringförmigen Stirnfläche 128 des Hülsenabschnitts 104 verrasten. Im Wesentlichen gleichzeitig kommt der Boden 158 des Einsatzteils 68 mit seiner dem Druckanschluss 66 zugewandten Stirnseite an der dem Druckraum 60 zugewandten Stirnfläche des Ringabschnitts 106 der Laufhülse 100 zur Anlage. Da sowohl der Übergang von der dem Druckanschluss 66 zugewandten Stirnfläche der Federarme 164 zu deren Außenumfangsfläche als auch der Übergang der dem Druckraum 60 zugewandten Stirnfläche der Längsrippen (nicht dargestellt) zu deren Innenumfangsfläche rechtwinklig, nur mit einer gebrochenen Kante, d.h. ohne Schräge ausgeführt ist, lässt sich das Einsatzteil 68 zum Zylindergehäuse 52 nur bei korrekter Winkelorientierung dieser Teile zueinander fügen. Bei dem Versuch, ein nicht oder inkorrekt winkelorientiertes Einsatzteil 68 zum Zylindergehäuse 52 zu fügen, stoßen die einander zugewandten Stirnflächen an den Federarmen 164 einerseits und den Längsrippen (nicht gezeigt) andererseits im Wesentlichen flächig aufeinander und verhindern somit eine weitere axiale Verschiebung des Einsatzteils 68 bezüglich des Zylindergehäuses 52. Da im Übrigen die Winkelorientierung des Einsatzteils 68 bezüglich des Zylindergehäuses 52 an dessen Grundkörper 80 erfolgt, wird eine in Umfangsrichtung wirkende Fixierung der Laufhülse 100 im Grundkörper 80 nicht benötigt.

Wie insbesondere den Fig. 1 und 6 zu entnehmen ist, weist der Kanal 72 im Einsatzteil 68 einen schraubengewindeartig verlaufenden Wendelabschnitt 168 auf, der über einen im Boden 158 des Einsatzteils 68 in radialer Richtung verlaufenden Verbindungsabschnitt 170 mit einem durch den Fortsatz 160 des Einsatzteils 68 gebildeten, in axialer Richtung verlaufenden Endabschnitt 172 verbunden ist, so dass der Wendelabschnitt 168 sowohl mit der nehmerzylinderseitigen Öffnung 74 als auch mit der geberzylinderseitigen Öffnung 76 des Kanals 72 kommuniziert. Dabei ist der Wendelabschnitt 168 des Kanals 72 am Außenumfang des Mantelabschnitts 156 des Einsatzteils 68 vorzugsweise spritzgießtechnisch als Nut ausgebildet, die im montierten Zustand des Einsatzteils 68 nach radial außen von der durch die Umfangswand 64 gebildeten Innenumfangsfläche des Zylindergehäuses 52 abgedeckt ist. Im dargestellten Fall umfasst der Wendelabschnitt 168 fünf vollständige Windungen; es ist jedoch ersichtlich, dass der Wendelabschnitt den jeweiligen funktionalen Erfordernissen entsprechend auch mehr oder weniger Windungen umfassen kann, was sich - ebenso wie andere, von der gezeigten, im Wesentlichen rechteckigen Querschnittsform abweichende Querschnittsformen des Wendelabschnitts - leicht spritzgießtechnisch bewerkstelligen lässt. Der Querschnitt bzw. die Querschnittsfläche des Wendelabschnitts 168 des Kanals 72 ist vorzugsweise so zu wählen, dass er/sie kleiner oder gleich dem minimalen Querschnitt des Druckanschlusses 66 ist, der im dargestellten Fall durch die Druckanschlussbohrung 130 definiert ist.

Gemäß insbesondere den Fig. 1, 6 und 7 weist das Einsatzteil 68 ferner an seinem druckraumseitigen Ende einen Fesselabschnitt 174 auf, welcher mit einem druckraumseitigen Fortsatz 176 des Kolbens 56 dergestalt zusammenwirkt, dass der Kolben 56 vor einer Druckmittelbefüllung oder ersten Betätigung des Nehmerzylinders 50 in einer vorbestimmten Hubstellung bezüglich des Zylindergehäuses 52 fixiert und mit der Druckmittelbefüllung bzw. ersten Betätigung des Nehmerzylinders 50 gegenüber dem Zylindergehäuse 52 freigebbar ist. Genauer gesagt umfasst der Fesselabschnitt 174 des Einsatzteils 68 einen sich an dessen Mantelabschnitt 156 in Fig. 1 nach links anschließenden, bezüglich einer Mittelachse des Druckraums 60 axial ausgefluchteten Hohlzylinder 178 mit einem innenumfangsseitig umlaufenden, nach radial innen vorspringenden Ringwulst 180, der in Fig. 7 vergrößert gezeigt ist, während der zentrische Fortsatz 176 am Kolben 56 außenumfangsseitig mit einem Ringbund 182 (siehe Fig. 1) versehen ist, der eine sich zum Druckanschluss 66 hin geringfügig verjüngende Außenfläche aufweist und im am Einsatzteil 68 fixierten Zustand des Kolbens 56 den Ringwulst 180 formschlüssig hintergreift. Hierfür sind der gemäß insbesondere

Fig. 7 zum Druckraum 60 hin abgerundete Ringwulst 180 einerseits und der Ringbund 182 andererseits maßlich derart aufeinander abgestimmt, dass der lichte Innendurchmesser des Ringwulstes 180 geringfügig kleiner ist als der größte Außendurchmesser des Ringbunds 182, während dessen Abstand zur Stirnfläche des Kolbens 56 geringfügig größer ist als die axiale Länge des Ringwulstes 180.

Zur Fesselung der Kolbenbaugruppe 54 am Einsatzteil 68 beim Zusammenbau des Nehmerzylinders 50 wird die Kolbenbaugruppe 54 gegen die Kraft der Schraubendruckfeder 96 soweit im Sinne einer Verkleinerung des Druckraums 60 in das Zylindergehäuse 52 hinein geschoben bis der Fortsatz 176 am Kolben 56 mit seinem zum Einsatzteil 68 hin abgeschrägten Ringbund 182 an dem dem Druckraum 60 zugewandten, abgerundeten Ringwulst 180 zur Anlage gelangt. Bei einer weiteren axialen Relativverschiebung der Kolbenbaugruppe 54 bezüglich des Zylindergehäuses 52 in Richtung des Druckanschlusses 66 weitet der Ringbund 182 am Kolbenfortsatz 176 den Ringwulst 180 des Fesselabschnitts 174 elastisch nach radial außen auf. Nach Überdrücken des Ringwulstes 180 schnappt dieser infolge der elastischen Eigenschaften des Materials des Einsatzteils 68 hinter dem Ringbund 182, also in dem Ringspalt zwischen dem Ringbund 182 und der dem Druckraum 60 zugewandten Stirnfläche des Kolbens 56 ein. Die Kolbenbaugruppe 54 ist nun formschlüssig am Fesselabschnitt 174 des Einsatzteils 68 fixiert.

Da somit die Kolbenbaugruppe 54 in einer Stellung gefesselt ist, in der sie so weit wie möglich in das Zylindergehäuse 52 hineingeschoben ist, benötigt der Nehmerzylinder 50 bei der Lagerung, dem Transport und der Montage im Kraftfahrzeug nur einen geringen Raum. Darüber hinaus kann der Nehmerzylinder 50 im Wesentlichen kraftfrei im Kraftfahrzeug montiert werden, weil die Schraubendruckfeder 96 nicht zusammengedrückt werden muss, vielmehr vermittels der durch das Einsatzteil 68 bewirkten Fesselung der Kolbenbaugruppe 54 in einer vorgespannten Stellung gehalten ist.

Für die erste Betätigung des im Kraftfahrzeug montierten Nehmerzylinders 50 wird das Druckmittel über den Druckanschluss 66 dem Druckraum 60 zugeführt. Infolge des sich hierbei im Druckraum 60 aufbauenden Drucks, der an der Wirkfläche des Kolbens 56 angreift, erfährt der Kolben 56 eine in Fig. 1 nach links gerichtete Kraft, die sich der Kraft der Schraubendruckfeder 96 aufaddiert. Übersteigt die Summe dieser Kräfte die Haltekraft der Verbindung zwischen dem Fortsatz 176 des Kolbens 56 und dem Fesselabschnitt 174 des Einsatzteils 68 wird der Ringwulst 180 am Fesselabschnitt 174 über den Ringbund 182 am Fortsatz 176 wieder aufgedehnt, worauf die Kolbenbaugruppe 54 vom Einsatzteil 68 freikommt. Eine weitere Fesselung der Kolbenbaugruppe 54 im Betrieb des Nehmerzylinders 50 ist nicht vorgesehen und kann auch nicht erfolgen, da der in Fig. 1 gezeigte axiale Abstand zwischen dem Fortsatz 176 am Kolben 56 und dem Fesselabschnitt 174 am Einsatzteil 68 im Betrieb des Nehmerzylinders 50 nicht mehr unterschritten wird.

Aus der obigen Beschreibung ist ersichtlich, dass die Haltekraft der Verbindung zwischen dem Fortsatz 176 des Kolbens 56 und dem Fesselabschnitt 174 des Einsatzteils 68 konstruktiv derart ausgelegt ist, dass sie einerseits hinreichend größer ist als die Federkraft der Schraubendruckfeder 96, um ein ungewolltes Lösen der Fesselung der Kolbenbaugruppe 54 zu verhindern, andererseits aber ausreichend kleiner als die Haltekraft der Verbindung zwischen dem Einsatzteil 68 und dem Zylindergehäuse 52, so dass das Einsatzteil 68 bei der Erstbetätigung des Nehmerzylinders 50 nicht aus dem Druckanschluss 66 hinausgezogen wird.

Wie des Weiteren der Fig. 1 zu entnehmen ist, ist der Volumenaufnehmer 78 am Innenumfang des Mantelabschnitts 156 des Einsatzteils 68 montiert, so dass der Wendelabschnitt 168 des Kanals 72 den Volumenaufnehmer 78 koaxial umgibt. Hierfür weist das Einsatzteil 68 eine zylindrische Sackbohrung 184 auf, an die sich in den Fig. 1 und 6 nach links ein sich konisch erweiternder Fügeabschnitt 186 für den Volumenaufnehmer 78 anschließt, der mit einer kleinen Stufe am Hohlzylinder 178 endet.

Bei dem in den Fig. 8 und 9 näher gezeigten Volumenaufnehmer 78 handelt es sich um ein gummielastisches, im Wesentlichen spulenförmiges Element, welches eine Durchgangsbohrung 188 hat, mit einem mittigen Zylinderabschnitt 190 und zu beiden Seiten des Zylinderabschnitts 190 gelegenen Öffnungstrichtern 192. Außenumfangsseitig ist der bezüglich seiner Längsachse rotationssymmetrisch und bezüglich einer gedachten, zu der Längsachse senkrechten Ebene spiegelsymmetrisch ausgebildete Volumenaufnehmer 78 mit einer hohlkehlenförmigen Ringaussparung 194 versehen, die gemäß Fig. 1 im Bereich der Sackbohrung 184 zusammen mit dem Innenumfang des Mantelabschnitts 156 des Einsatzteils 68 eine ringförmige Luftkammer 196 begrenzt. Die Luftkammer 196 ist zu beiden Seiten, d.h. in Fig. 1 nach rechts bzw. links durch ringförmige Dichtwulste 198 (siehe die Fig. 8 und 9) des Volumenaufnehmers 78 abgedichtet. Die Wirkungsweise dieses Volumenaufnehmers 78 wurde eingangs schon näher erläutert, so dass an dieser Stelle weitere Ausführungen hierzu entbehrlich erscheinen. In diesem Zusammenhang zu erwähnen ist schließlich noch, dass sich die dargestellte Anordnung bzw. Positionierung von Kanal 72 und Volumenaufnehmer 78, bei der der Volumenaufnehmer 78 dem die Leitungszusatzstrecke bildenden Kanal 72 vom Druckraum 60 aus gesehen hydraulisch vorgeschaltet ist, als besonders schwingungsdämpfend wirksam erwiesen hat. Die Schwingungsdämpfungseigenschaften der vorbeschriebenen Vorrichtung 70 zur Reduzierung von Druckpulsationen sind in Fig. 10 gut zu erkennen, die beispielhaft das Ergebnis von Versuchen illustriert, bei denen (1.) eine Sinusschwingung mit variabler Frequenz und einer Amplitude von 1 g an die Kolbenstange 58 des Nehmerzylinders 50 angelegt wurde, (2.) die Beschleunigungen an einer Kolbenstange (nicht gezeigt) des mit dem Nehmerzylinder 50 hydraulisch verbundenen Geberzylinders (nicht dargestellt) und an der Kolbenstange 58 gemessen und (3.) für die Versuchsauswertung zueinander ins Verhältnis gesetzt über der Erregerfrequenz in einem Diagramm aufgetragen wurden. Hierbei kamen ein Nehmerzylinder 50 mit einem effektiven Kolbenwirkdurchmesser von 22,20 mm und ein Geberzylinder mit einem effektiven Kolbenwirkdurchmesser von 19,05 mm zum Einsatz, die über eine ausgehend vom Nehmerzylinder 50 aus (a) einem elastomeren Kupplungsschlauchabschnitt (Innendurchmesser: ca. 6 mm, Außendurchmesser: ca. 12 mm, Länge: ca. 250 mm, eine Gewebelage) und (b) einem metallischen Kupplungsrohrabschnitt (Innendurchmesser: ca. 4,75 mm, Wandstärke: ca. 0,7 mm, Länge: ca. 610 mm) bestehende Druckleitungsanordnung hydraulisch miteinander verbunden waren. Die Länge des Wendelabschnitts 168 des Kanals 72 der Vorrichtung 70 zur Reduzierung von Druckpulsationen betrug ca. 200 mm, mit einem offenen Querschnitt von ca. 6 mm². Als Volumenaufnehmer 78 kam ein Gummidichtstopfen entsprechend den Fig. 8 und 9 mit einer Gesamtlänge von ca. 7,3 mm, einem maximalen Außendurchmesser von ca. 9,6 mm im Bereich der Dichtwulste 198 und einem Innendurchmesser von ca. 3 mm im Bereich des Zylinderabschnitts 190 zum Einsatz.

Das Schwingungsdämpfungsvermögen der getesteten Vorrichtung 70 zur Reduzierung von Druckpulsationen (Markierung mit nicht ausgefüllten Quadraten) im Vergleich zu der Anordnung ohne Vorrichtung zur Reduzierung von Druckpulsationen (Markierung mit Dreiecken) ist in Fig. 10 klar ersichtlich: Es kommt zu einer erheblichen Verkleinerung und Verlagerung des ersten Maximums (bei ca. 65 Hz) zu niedrigeren Frequenzen; auch die weiteren Schwingungsmaxima werden stark "gedrückt", wenigstens um ca. 50%. Für den Fachmann ist klar, dass diese Ergebnisse nur beispielhaft zu verstehen sind und die Vorrichtung 70 zur Reduzierung von Druckpulsationen im Hinblick auf ihre Schwingungsdämpfungswirkung für die jeweilige Einbausituation natürlich wie hinsichtlich des Amplitudenverhältnisses bzw. des zu dämpfenden Frequenzbereichs gewünscht optimiert werden kann, sei es durch eine Änderung der Form/Abmessungen von Kanal 72 bzw. Volumenaufnehmer 78 oder die Wahl eines anderen Werkstoffs für den Volumenaufnehmer 78.

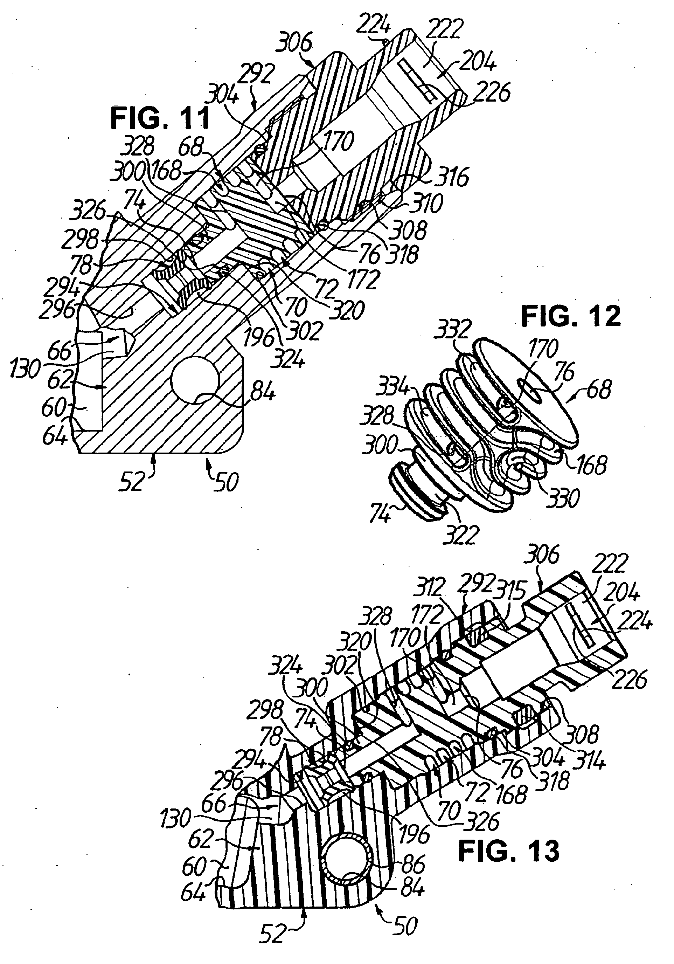

Die Fig. 11 bis 13 zeigen schließlich zwei erfindungsgemäße Varianten zu dem oben unter Bezugnahme auf die Fig. 1 bis 10 beschriebenen Fall, die nachfolgend nur insoweit beschrieben werden sollen, als sie sich hiervon unterscheiden.

Diesen Varianten ist gemein, dass die Vorrichtung 70 zur Reduzierung von Druckpulsationen wiederum im Zylindergehäuse 52 des Nehmerzylinders 50 integriert ist, diesmal allerdings nicht im Druckraum 60, sondern in einem vom Druckraum 60 räumlich getrennten bzw. beabstandeten Druckanschlussabschnitt 292 des Zylindergehäuses 52, der sich in den dargestellten Ausführungsbeispielen ausgehend von dem Gehäuseboden 62 des Zylindergehäuses 52 unter ca. 40° zur Gehäuselängsachse vom Gehäuseboden 62 weg erstreckt.

Hierbei ist der Druckanschlussabschnitt 292 ausgehend von seinem in den Fig. 11 und 13 rechten, oberen Ende mit einer Stufenbohrung 294 versehen, die letztendlich in der Druckanschlussbohrung 130 des Druckanschlusses 66 zum Druckraum 60 mündet. Genauer gesagt umfasst die Stufenbohrung 294 ausgehend von der Druckanschlussbohrung 130 eine Mehrzahl von Bohrungsabschnitten mit von Abschnitt zu Abschnitt zunehmendem Innendurchmesser, nämlich
- einen Verbindungsabschnitt 296 zur Druckanschlussbohrung 130,
- einen ersten Aufnahmeabschnitt 298 zur Aufnahme des Volumenaufnehmers 78 (Details zu Letzterem vgl. die Fig. 8 und 9 mit zugehöriger Beschreibung) und eines rohrförmigen Fortsatzes 300 des Einsatzteils 68,
- einen - ggf. nochmals geringfügig gestuften (siehe Fig. 13) - zweiten Aufnahmeabschnitt 302 für den Hauptteil des Einsatzteils 68 und ein/einen Steckende bzw. -abschnitt 304 eines Anschlussteils 306, mittels dessen das Einsatzteil 68 im Druckanschlussabschnitt 292 gehalten ist,
- einen Befestigungsabschnitt 308 zur Befestigung des Anschlussteils 306 im Druckanschlussabschnitt 292 - in Fig. 11 mit einem Innengewinde versehen, das mit einem Außengewinde 310 am Anschlussteil 306 zusammenwirkt; in Fig. 13 hingegen mit einer Ringnut 312 versehen, in der ein geschlitzter Kunststoffring 314 zur Ausbildung einer Schnappverbindung mit einer zugeordneten Ringnut 315 im Anschlussteil 306 eingesetzt ist - und
- ggf. eine Fügeschräge 316 (siehe Fig. 11) für das Anschlussteil 306.

Das Anschlussteil 306 selbst hat einen Geberanschluss 204 mit an sich bekannter Aufnahmegeometrie, umfassend eine an der geberzylinderseitigen Öffnung 76 des Kanals 72 endende Aussparung 222, ein Sicherungselement 224 und einen Steckschlitz 226 hierfür. Ferner ist ein Steckende bzw. -abschnitt 304 mit einer Ringnut zur Aufnahme eines O-Rings 318 versehen, der gegenüber dem zweiten Aufnahmeabschnitt 302 der Stufenbohrung 294 abdichtet.

Das an der zwischen dem ersten Aufnahmeabschnitt 298 und dem zweiten Aufnahmeabschnitt 302 der Stufenbohrung 294 gebildeten Ringschulter 320 anliegende Einsatzteil 68 weist am Außenumfang des Fortsatzes 300 ebenfalls eine Ringnut 322 (vgl. Fig. 12) auf, in der ein weiterer O-Ring 324 aufgenommen ist, der gegenüber dem ersten Aufnahmeabschnitt 298 der Stufenbohrung 294 abdichtet. Schließlich ist das Einsatzteil 68 ausgehend von dem freien Ende der Fortsatzes 300 mit einer Sackbohrung 326 versehen, die als Bestandteil des Kanals 72 an ihrem eine Ende die nehmerzylinderseitige Öffnung 74 bildet und an ihrem anderen Ende über eine ebenfalls zum Kanal 72 zählende, quer zum Einsatzteil 68 verlaufende Verbindungsbohrung 328 hydraulisch mit dem Wendelabschnitt 168 des Einsatzteils 68 verbunden ist.

Der Wendelabschnitt 168 des Einsatzteils 68 besitzt bei 330 eine Wendelumkehr, die bewirkt, dass die bei einer Betätigung der hydraulischen Kupplungsbetätigung von der geberzylinderseitigen Öffnung 76 kommende Hydraulikflüssigkeit, die zunächst bezüglich der Längsachse des Einsatzteils 68 im Uhrzeigersinn durch den Wendelabschnitt 168 des Kanals 72 fließt, an der spitzkehrenartig ausgebildeten Wendelumkehr 330 ihre Bewegungsrichtung ändert und ab der Wendelumkehr 330 gegen den Uhrzeigersinn durch den Wendelabschnitt 168 fließt. Mit anderen Worten gesagt unterteilt die Wendelumkehr 330 den Wendelabschnitt 168 in einen rechtsgewindeartig verlaufenden Unterabschnitt 332 und einen linksgewindeartig verlaufenden Unterabschnitt 334. Hierdurch ergibt sich - verglichen mit dem Wendelabschnitt ohne Wendelumkehr - zum einen ein die Dämpfungswirkung der Vorrichtung 70 erhöhender, geringfügig größerer Durchflusswiderstand; zum anderen ist der axiale Bauraumbedarf des so ausgebildeten Wendelabschnitts 168 kleiner.

Im Übrigen unterscheiden sich die Varianten gemäß den Fig. 11 und 13 - abgesehen von dem unterschiedlichen Werkstoff für das Zylindergehäuse 52 (Leichtmetall in Fig. 11; Kunststoff in Fig. 13) - noch dahingehend, dass bei der Variante gemäß Fig. 13 das Einsatzteil 68 und das Anschlussteil 306 einstückig ausgebildet sind, vorzugsweise mittels Spritzgießen aus Kunststoff.

Es wird eine zwischen einen Druckraum eines Nehmerzylinders und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung zur Reduzierung von Druckpulsationen offenbart. Diese Vorrichtung umfasst eine Leitungszusatzstrecke in Form eines einen Wendelabschnitt aufweisenden Kanals, der eine nehmerzylinderseitige Öffnung, eine geberzylinderseitige Öffnung und eine Kanallänge aufweist, die ein Mehrfaches des direkten Abstands zwischen den beiden Öffnungen beträgt, und einen Volumenaufnehmer, der unter Druck elastisch verformbar ist. Dabei sind der Kanal und der Volumenaufnehmer in einem Gehäuse zu einer Baugruppe zusammengefasst, wobei der schraubengewindeartig verlaufende Wendelabschnitt eine Wendelumkehr aufweist, die ihn in einen rechtsgewindeartig verlaufenden Unterabschnitt und einen linksgewindeartig verlaufenden Unterabschnitt unterteilt. Im Ergebnis wird eine Vorrichtung geschaffen, die sehr gute Schwingungsdämpfungseigenschaften aufweist, sehr kompakt baut und einen kostengünstigen Aufbau besitzt.

### BEZUGSZEICHENLISTE

- 10: hydraulische Kupplungsbetätigung
- 11: Pedalbock
- 12: Geberzylinder
- 14: Nehmerzylinder
- 16: Hydraulikleitung
- 18: erster Rohrabschnitt
- 20: Schlauchabschnitt
- 22: zweiter Rohrabschnitt
- 24: Ausgleichsbehälter
- 26: Kolbenstange 28 Kupplungspedal
- 30: Kolbenstange
- 32: Ausrückhebel
- 34: Ausrücklager
- 36: Ausrückmechanismus
- 38: Reibungskupplung
- 40: Kupplungsdruckplatte
- 42: Getriebewelle
- 43: Schwungscheibe
- 44: Kupplungsmitnehmerscheibe

- 50: Nehmerzylinder
- 52: Zylindergehäuse
- 54: Kolbenbaugruppe
- 56: Kolben
- 58: Kolbenstange
- 60: Druckraum
- 62: Gehäuseboden 64 Umfangswand
- 66: Druckanschluss
- 68: Einsatzteil
- 70: Vorrichtung zur Reduzierung von Druckpulsationen
- 72: Kanal 74 nehmerzylinderseitige Öffnung
- 76: geberzylinderseitige Öffnung
- 78: Volumenaufnehmer
- 80: Grundkörper
- 82: Befestigungsflansch
- 84: Befestigungsbohrung
- 86: Stahlbuchse
- 88: Radialnut
- 90: Faltenbalgabschnitt
- 92: Schutzkappe
- 94: Ringbund
- 96: Schraubendruckfeder
- 98: Stufenbohrung
- 100: Laufhülse
- 102: Hülsenabschnitt
- 104: Hülsenabschnitt
- 106: Ringabschnitt
- 108: Bohrungsabschnitt
- 100: Bohrungsabschnitt
- 112: Bohrungsabschnitt
- 114: Bohrungsabschnitt
- 116: Hinterschnitt
- 118: Sicherungselement
- 120: Ringschulter
- 122: Radialnut
- 124: O-Ring
- 126: Ringschulter
- 128: Stirnfläche
- 130: Druckanschlussbohrung
- 132: Radialnut
- 134: Nutring
- 136: Aussparung
- 138: Kugelkopf
- 140: Sicherungselement 142 Ende 144 Endstück
- 146: Endfläche
- 148: Ringbund
- 150: Ringaussparung
- 152: Befestigungsabschnitt
- 154: Axialnut
- 156: Mantelabschnitt
- 158: Boden
- 160: Fortsatz
- 162: Ringbund
- 164: Federarm
- 165: Widerlagerfläche
- 166: Schlitz
- 168: Wendelabschnitt
- 170: Verbindungsabschnitt
- 172: Endabschnitt
- 174: Fesselabschnitt
- 176: Fortsatz
- 178: Hohlzylinder
- 180: Ringwulst
- 182: Ringbund
- 184: Sackbohrung
- 186: Fügeabschnitt
- 188: Durchgangsbohrung
- 190: Zylinderabschnitt
- 192: Öffnungstrichter
- 194: Ringaussparung
- 196: Luftkammer
- 198: Dichtwulst

- 204: Geberanschluss
- 222: Aussparung
- 224: Sicherungselement
- 226: Steckschlitz
- 292: Druckanschlussabschnitt
- 294: Stufenbohrung
- 296: Verbindungsabschnitt
- 298: erster Aufnahmeabschnitt
- 300: Fortsatz
- 302: zweiter Aufnahmeabschnitt
- 304: Steckende bzw. -abschnitt
- 306: Anschlussteil
- 308: Befestigungsabschnitt
- 310: Außengewinde
- 312: Ringnut
- 314: Kunststoffring
- 315: Ringnut
- 316: Fügeschräge
- 318: O-Ring
- 320: Ringschulter
- 322: Ringnut
- 324: O-Ring
- 326: Sackbohrung
- 328: Verbindungsbohrung
- 330: Wendelumkehr
- 332: rechtsgewindeartig verlaufender Unterabschnitt
- 334: linksgewindeartig verlaufender Unterabschnitt

## Patentansprüche

1. Zwischen einen Druckraum (60) eines Nehmerzylinders (50) und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung (70) zur Reduzierung von Druckpulsationen, mit
einer Leitungszusatzstrecke in Form eines einen Wendelabschnitt (168) aufweisenden Kanals (72), der eine nehmerzylinderseitige Öffnung (74), eine geberzylinderseitige Öffnung (76) und eine Kanallänge aufweist, die ein Mehrfaches des direkten Abstands zwischen den beiden Öffnungen (74, 76) beträgt, und
einem Volumenaufnehmer (78), der unter Druck elastisch verformbar ist,
**dadurch gekennzeichnet, dass** der Kanal (72) und der Volumenaufnehmer (78) in einem Gehäuse (52) zu einer Baugruppe zusammengefasst sind, wobei der Wendelabschnitt (168) schraubengewindeartig verläuft und eine Wendelumkehr (330) aufweist, die den Wendelabschnitt (168) in einen rechtsgewindeartig verlaufenden Unterabschnitt (332) und einen linksgewindeartig verlaufenden Unterabschnitt (334) unterteilt.

2. Vorrichtung (70) nach Anspruch 1, **dadurch gekennzeichnet, dass** der Volumenaufnehmer (78) dem die Leitungszusatzstrecke bildenden Kanal (72) in einer Richtung vom Nehmerzylinder (50) aus zum Geberzylinder hin gesehen hydraulisch vorgeschaltet ist.

3. Vorrichtung (70) nach Anspruch 1 oder 2, **dadurch gekennzeichnet, dass** in das Gehäuse (52) ein Einsatzteil (68) eingesetzt ist, welches zumindest teilweise zusammen mit dem Gehäuse (52) den Kanal (72) begrenzt.

4. Vorrichtung (70) nach Anspruch 3, **dadurch gekennzeichnet, dass** der Wendelabschnitt (168) des Kanals (72) am Außenumfang des Einsatzteils (68) als Nut ausgebildet ist, die nach radial außen von einer Innenumfangsfläche des Gehäuses (52) abgedeckt ist.

5. Vorrichtung (70) nach Anspruch 3 oder 4, **dadurch gekennzeichnet, dass** es sich bei dem Volumenaufnehmer (78) um ein gummielastisches, spulenförmiges Element handelt, mit einer Durchgangsbohrung (188) und einer außenumfangsseitigen Ringaussparung (194), die zusammen mit einer Innenumfangsfläche des Gehäuses (52) eine ringförmige Luftkammer (196) begrenzt.

6. Vorrichtung (70) nach einem der vorhergehenden Ansprüche, **dadurch gekennzeichnet, dass** es sich bei dem Gehäuse um ein Zylindergehäuse (52) des Nehmerzylinders (50) oder des Geberzylinders handelt, das einen Druckanschluss (66) aufweist.

7. Vorrichtung (70) nach Anspruch 6, **dadurch gekennzeichnet, dass** der Wendelabschnitt (168) des Kanals (72) einen Querschnitt aufweist, der kleiner oder gleich dem minimalen Querschnitt des Druckanschlusses (66) ist.

8. Vorrichtung (70) nach wenigstens dem Anspruch 3, **dadurch gekennzeichnet, dass** das Einsatzteil (68) und vorzugsweise auch das Gehäuse (52) wenigstens teilweise aus einem Kunststoff spritzgegossen sind.

9. Vorrichtung (70) nach wenigstens dem Anspruch 6, **dadurch gekennzeichnet, dass** das Zylindergehäuse (52) einen Druckanschlussabschnitt (292) aufweist, der den Kanal (72) und den Volumenaufnehmer (78) enthält.

10. Vorrichtung (70) nach wenigstens den Ansprüchen 3 und 9, **dadurch gekennzeichnet, dass** das Einsatzteil (68) in den Druckanschlussabschnitt (292) eingesetzt und dort mittels eines Anschlussteils (306) gehalten ist.

11. Vorrichtung (70) nach Anspruch 10, **dadurch gekennzeichnet, dass** das Einsatzteil (68) und das Anschlussteil (306) einstückig ausgebildet sind.

## Claims

1. Device (70) for reducing pressure pulsations, the device being connectible between a pressure chamber (60) of a slave cylinder (50) and a pressure chamber of a master cylinder of a hydraulic force transmission system, particularly a hydraulic clutch actuating means for motor vehicles, and constantly open to the pressure medium, comprising
an additional conduit in the form of a channel (72) having a helix section (168), defining an opening (74) at the slave cylinder side and an opening (76) at the master cylinder side, and having a channel length equal to a multiple of the direct spacing of the two openings (74, 76), and
a volume receiving means (78) resiliently deformable under pressure,
**characterized in that** the channel (72) and the volume receiving means (78) are combined in a housing (52) to form a subassembly, wherein the helix section (168) extends in the manner of a screw thread and has a helix reversal (330) dividing the helix section (168) into a subsection (332) extending in the manner of a right-hand thread and a subsection (334) extending in the manner of a left-hand thread.

2. Device (70) according to claim 1, **characterized in that** the volume receiving means (78) is hydraulically connected upstream of the channel (72) forming the additional conduit as seen in a direction from the slave cylinder (50) to the master cylinder.

3. Device (70) according to claim 1 or 2, **characterized in that** an insert member (68) which at least partly together with the housing (52) bounds the channel (72) is inserted into the housing (52).

4. Device (70) according to claim 3, **characterized in that** the helix section (168) of the channel (72) is formed at the outer circumference of the insert member (68) as a groove, the groove being covered radially outwardly by an inner circumferential surface of the housing (52).

5. Device (70) according to claim 3 or 4, **characterized in that** the volume receiving means (78) is a rubber-elastic bobbin-shaped element with a passage bore (188) and at the outer circumferential side an annular recess (194) bounding together with the inner circumference of the housing (52) an annular air chamber (196).

6. Device (70) according to any one of the preceding claims, **characterized in that** the housing is a cylinder housing (52) of the slave cylinder (50) or the master cylinder and has a pressure connection (66).

7. Device (70) according to claim 6, **characterized in that** the helix section (168) of the channel (72) has a cross-section smaller than or equal to the minimum cross-section of the pressure connection (66).

8. Device (70) according to at least claim 3, **characterized in that** the insert member (68) and preferably also the housing (52) are injection-molded at least partly from a plastics material.

9. Device (70) according to at least claim 6, **characterized in that** the cylinder housing (52) has a pressure connection section (292) containing the channel (72) and the volume receiving means (78).

10. Device (70) according to at least claims 3 and 9, **characterized in that** the insert member (68) is inserted into the pressure connection section (292) and held there by means of a connecting member (306).

11. Device (70) according to claim 10, **characterized in that** the insert member (68) and the connecting member (306) are constructed integrally.

## Revendications

1. Dispositif (70) destiné à réduire des pulsations de pression, qui peut être monté entre une chambre de pression (60) d'un cylindre récepteur (50) et une chambre de pression d'un maître-cylindre d'un système hydraulique de transmission de force, notamment d'un actionnement hydraulique d'embrayage pour véhicules automobiles, et qui est toujours ouvert pour l'agent de pression, le dispositif comprenant
un parcours supplémentaire de conduite sous la forme d'un canal (72), qui comporte un tronçon en hélice (168), et présente une ouverture côté cylindre récepteur (74), une ouverture côté maître-cylindre (76), et une longueur de canal égale à un multiple de la distance directe entre les deux ouvertures (74, 76), et
un absorbeur de volume (78) qui peut se déformer de manière élastique sous l'effet de la pression, **caractérisé en ce que** le canal (72) et l'absorbeur de volume (78) sont regroupés en un module de construction dans un boitier (52), le tronçon en hélice (168) s'étendant à la manière d'un filetage de vis, et présentant une inversion d'hélice (330), qui subdivise le tronçon en hélice (168) en un sous-tronçon (332) s'étendant à la manière d'un filetage à droite, et un sous-tronçon (334) s'étendant à la manière d'un filetage à gauche.

2. Dispositif (70) selon la revendication 1, **caractérisé en ce que** l'absorbeur de volume (78) est placé en amont, sur le plan hydraulique, du canal (72) formant le parcours de conduite supplémentaire, dans une direction du cylindre récepteur (50) vers le maître-cylindre.

3. Dispositif (70) selon la revendication 1 ou la revendication 2, **caractérisé en ce que** dans le boitier (52) est inséré une pièce d'insert (68), qui délimite au moins partiellement, en commun avec le boitier (52), le canal (72).

4. Dispositif (70) selon la revendication 3, **caractérisé en ce que** le tronçon en hélice (168) du canal (72) est réalisé sur la périphérie extérieure de la pièce d'insert (68), sous forme de rainure, qui est recouverte radialement à l'extérieur, par une surface périphérique intérieure du boitier (52).

5. Dispositif (70) selon la revendication 3 ou la revendication 4, **caractérisé en ce que** concernant l'absorbeur de volume (78), il s'agit d'un élément en forme de bobine, à élasticité du type caoutchouc, comprenant un alésage de passage (188) et un évidement annulaire (194) sur la périphérie extérieure, qui délimite avec une surface périphérique intérieure du boitier (52), une chambre d'air (196) de forme annulaire.

6. Dispositif (70) selon l'une des revendications précédentes, **caractérisé en ce que** concernant le boitier, il s'agit d'un boitier de cylindre (52) du cylindre récepteur (50) ou du maître-cylindre, qui présente un raccord de pression (66).

7. Dispositif (70) selon la revendication 6, **caractérisé en ce que** le tronçon en hélice (168) du canal (72) présente une section transversale, qui est inférieure ou égale à la section transversale minimale du raccord de pression (66).

8. Dispositif (70) selon au moins la revendication 3, **caractérisé en ce que** la pièce d'insert (68), et de préférence également le boitier (52), sont moulés par injection, au moins en partie, en une matière plastique.

9. Dispositif (70) selon au moins la revendication 6, **caractérisé en ce que** le boitier de cylindre (52) présente un tronçon de raccord de pression (292), qui renferme le canal (72) et l'absorbeur de volume (78).

10. Dispositif (70) selon au moins les revendications 3 et 9, **caractérisé en ce que** la pièce d'insert (68) est insérée dans le tronçon de raccord de pression (292) et y est maintenue au moyen d'une pièce de raccord (306).

11. Dispositif (70) selon la revendication 10, **caractérisé en ce que** la pièce d'insert (68) et la pièce de raccord (306) sont réalisées d'un seul tenant.
